# EUROPEAN PATENT SPECIFICATION

(11) **EP 4 293 552 B1**
(45) Date of publication and mention of the grant of the patent: **24.06.2026**
(21) Application number: 22762378.2
(22) Date of filing: 17.02.2022
(51) Int. Cl.: G06F 21/62, G06F 21/31, G06F 21/57, G06F 21/45

(54) **MANDATORY ACCESS CONTROL MAC METHOD AND RELATED DEVICE**
MAC-VERFAHREN ZUR OBLIGATORISCHEN ZUGANGSSTEUERUNG UND ZUGEHÖRIGE VORRICHTUNG
PROCÉDÉ DE CONTRÔLE D'ACCÈS OBLIGATOIRE (MAC) ET DISPOSITIF ASSOCIÉ

(30) Priority: 05.03.2021 CN 202110245052
(43) Date of publication of application: 20.12.2023
(73) Proprietor: Huawei Technologies Co., Ltd., Shenzhen, Guangdong 518129 (CN)
(72) Inventor: QIAN, Feng, Shenzhen, Guangdong 518129 (CN); WANG, Lei, Shenzhen, Guangdong 518129 (CN); KUANG, Jiou, Shenzhen, Guangdong 518129 (CN)
(74) Representative: Epping - Hermann - Fischer
(86) International application number: PCT/CN2022/076569
(87) International publication number: WO 2022/183912

(56) References cited:
- CN-A- 110 381 068
- CN-A- 111 818 059
- US-A1- 2019 306 719
- US-A1- 2019 306 719
- BARBORA ANCINCOVA: "Red Hat Enterprise Linux 6 Security-Enhanced Linux", 9 July 2015 (2015-07-09), XP055243734, Retrieved from the Internet <URL:https://access.redhat.com/documentation/en-US/Red_Hat_Enterprise_Linux/6/pdf/Security-Enhanced_Linux/Red_Hat_Enterprise_Linux-6-Security-Enhanced_Linux-en-US.pdf> [retrieved on 20160121]

## Description

### TECHNICAL FIELD

This application relates to the field of communication technologies, and in particular, to a mandatory access control (English: mandatory access control, MAC for short) method and a related device.

### BACKGROUND

A security module is added to an operating system to improve a security protection capability of the operating system, and the security module implements mandatory access control on the operating system. For example, security-enhanced Linux (English: Security-Enhanced Linux, SELinux for short) in a Linux operating system improves security of Linux. For another example, SEAndroid in an Android (English: Android) operating system improves security of Android.

Currently, the security module uses a MAC mechanism to perform permission management on one or more operations that a subject (or referred to as a process) accesses an object (or referred to as a resource) to perform in the operating system, and limit, according to a preset rule in a security policy (English: security policy), an operation that the subject can access the object to perform. When a behavior that the subject accesses the object to perform the operation does not match the rule in the security policy, if the security module works in an enforcing (English: enforcing) mode, the security module forbids the subject to access the object; or if the security module works in a permissive (English: permissive) mode, the security module allows the subject to access the object and perform the operation. In this way, when the behavior that the subject accesses the object to perform the operation does not match the rule in the security policy, same control on all behaviors that the subject accesses the object to perform the operation is performed in the MAC mechanism. Consequently, there are many problems.

Based on this, a MAC method urgently needs to be provided, to flexibly and safely determine whether a to-be-performed action can be performed, and implement proper MAC.

US 2019/306719 A1 A method to secure a mobile device operating system that enforces a mandatory access control (MAC) security model, comprising: instantiating mandatory access control (MAC) in the mobile device operating system in a permissive mode of operation in which permission denials are logged but not enforced; monitoring application execution parameters as one or more applications are executed; collecting, as a set of security-sensitive events, the application execution parameters including one or more permission denials generated by the MAC operating in the permissive mode of operation, the collected set of security-sensitive events representing a monitored state of the mobile device operating system; and determining whether the set of security-sensitive events representing the monitored state match against a signature that is indicative of an advanced persistent threat (APT).

Barbora Ancincova: "Red Hat Enterprise Linux 6 Security-Enhanced Linux", assists users and administrators in managing and using Security-Enhanced Linux.

### SUMMARY

Based on this, embodiments of this application provide a mandatory access control MAC method and a related device. When a subject is to access an object to perform an operation, a security module can flexibly determine, while ensuring security, whether a behavior that the subject accesses the object to perform the operation needs to be allowed or rejected. This improves flexibility and security of a MAC mechanism.

In this application, an operating system may be an operating system that performs MAC based on a security label, for example, may be a Linux-based operating system, an Android-based operating system, or an Apple operating system. If the operating system is a Linux operating system, a security module in the operating system may be SELinux. If the operating system is an Android operating system, a security module in the operating system may be SEAndroid.

According to a first aspect, embodiments of this application provide a MAC method. The method is applied to a security module in an operating system. When the security module works in an enforcing mode, the MAC method may include, for example: When a first subject accesses a first object to perform a first operation, if the security module determines, based on a security policy, that the first subject has no permission to access the first object to perform the first operation, but the first object is configured to be in a permissive mode, the security module may allow the first subject to access the first object and perform the first operation. The first object includes a file and/or a dir and/or a file system and/or a network port, and/or a device .It can be learned that, when a status of a "main switch" is the enforcing mode, the security module can flexibly determine, based on whether the permissive mode is configured for an object, whether a behavior that a subject accesses the object to perform an operation needs to be allowed or rejected. This improves flexibility and security of a MAC mechanism. In addition, even if a communication apparatus in which the operating system is located is complex, and permission for the subject to access the object to perform the operation is omitted from the sorted security policy, the object may also be configured to be in the permissive mode to ensure that the subject can access the object and perform the operation, to ensure that a service including that the subject accesses the object to perform the operation runs normally and is not interrupted. Moreover, in the MAC method, the security module may sort out the security policy based on the object, and set an object that needs to open permission to be in the permissive mode, and there is no need to comprehensively sort out, into the security policy, all permission for the subject to access the object to perform the operation, to reduce workload of sorting out the security policy. The security policy (English: security policy) includes different rules, and a type of the rule includes but is not limited to: a security label of each subject, a security label of each object, permission (for example, an allow (English: allow) rule) of the subject to access the object to perform the operation, and a rule of configuring an object type corresponding to the object to be in the permissive mode.

In an implementation, the security policy in the security module includes a first rule, and the first rule indicates the first object to work in the permissive mode. For example, an object type corresponding to the first object is os_dev_t, and the first rule included in the security policy may be permissive os_dev_t, indicating that all objects corresponding to os_dev_t to be configured to be in the permissive mode, so that the first rule may indicate the first object to be configured to be in the permissive mode.

In an implementation, when the security module allows, only based on that the first object is configured to be in the permissive mode, the first subject to access the first object and perform the first operation, the security module may further generate a first log after allowing the first subject to access the first object and perform the first operation, where the first log is for recording information related to the fact that the first subject accesses the first object to perform the first operation. The first log may be a system log, and recorded content may include: a security label of the first subject, a security label of the first object, the first subject being allowed to access the first object to perform the first operation, and permissive=1, where permissive=1 indicates that, after the first object is configured to be in the permissive mode, the behavior is allowed to be performed. In this way, the security module can analyze and understand security of the operating system and completeness and accuracy of the security policy based on the recorded log.

In an implementation, the security module may further improve the security policy through verification or testing. In an example, if it is determined, through verification or testing, that the behavior that the first subject accesses the first object to perform the first operation is a secure access behavior, and it is determined, from the security policy, that the first subject has no permission to access the first object to perform the first operation due to omission in sorting out the security policy, the security module may update the security policy, so that an updated security policy includes a second rule, where the second rule indicates that the first subject is allowed to access the first object to perform the first operation. In another example, if it is determined, through verification or testing, that the behavior that the first subject accesses the first object to perform the first operation is an insecure attack behavior, for security purposes, the first rule may be deleted from the security policy. In this way, when the behavior that the first subject accesses the first object to perform the first operation occurs again, it is determined, based on the security policy, that the first subject has no permission to access the first object to perform the first operation, and it may be determined that the first object is not configured to be in the permissive mode, so that the first subject is forbidden to access the first object to perform the first operation, to ensure the security of the operating system. In this way, by improving the security policy, when the behavior that the first subject accesses the first object to perform the first operation occurs again, the behavior can be accurately processed based on an improved security policy.

In an implementation, the MAC method may further include, for example: When a second subject accesses a second object to perform a second operation, if the security module determines, based on the security policy, that the second subject has no permission to access the second object to perform the second operation, and the second object is not configured to be in the permissive mode, the security module forbids the second subject to access the second object to perform the second operation. For example, in the security policy of the security module, some non-critical objects in the operating system may be configured to be in the permissive mode, to implement loose access to the non-critical objects. To ensure the security of the operating system, a critical object or fully verified objects may not be configured to be in the permissive mode, to implement mandatory protection on the objects.

In an implementation, when the security module forbids, based on that the second object is not configured to be in the permissive mode, the second subject to access the second object to perform the second operation, the security module may further generate a second log after forbidding the second subject to access the second object to perform the second operation, where the second log is for recording information related to the fact that the second subject accesses the second object to perform the second operation. The second log may be a system log, and recorded content may include: a security label of the second subject, a security label of the second object, the second subject being forbidden to access the second object to perform the second operation, and permissive=0, where permissive=0 indicates that the second object is not configured to be in the permissive mode and the behavior is forbidden to be performed. In this way, the security module can analyze and understand the security of the operating system and the completeness and the accuracy of the security policy based on the recorded log.

According to a second aspect, embodiments of this application further provide another MAC method. The method is applied to a security module in an operating system. When the security module works in a permissive mode, the MAC method may include, for example: When a first subject accesses a first object to perform a first operation, if the security module determines, based on a security policy, that the first subject has no permission to access the first object to perform the first operation, but the first object or the first subject is configured to be in an enforcing mode, the security module may forbid the first subject to access the first object to perform the first operation. The first object includes a file and/or a dir and/or a file system and/or a network port, and/or a device. In this way, when a status of a "main switch" is the permissive mode, the security module flexibly determines, based on whether the enforcing mode is configured for a subject or an object, whether a behavior that the subject accesses the object to perform an operation needs to be allowed or rejected. This improves flexibility and security of a MAC mechanism. In addition, in the MAC method, the security module may sort out the security policy based on the object or the subject, and set a subject or an object that needs to be forbidden forcibly to be in the enforcing mode, to ensure a security hardening function of the security module on the operating system, and there is no need to comprehensively sort out, into the security policy, all permission for the subject to access the object to perform the operation, to reduce workload of sorting out the security policy.

It should be noted that the security module may support the enforcing mode of the subject in the security policy, or support the enforcing mode of the object in the security policy. However, to enable the security module to effectively control the permission based on the security policy, the security module generally does not support the enforcing mode of the subject and the enforcing mode of the object at the same time.

In an implementation, the security policy may include a first rule, and the first rule indicates the first subject to work in the enforcing mode. In this case, when the security policy supports the enforcing mode of the subject, after it is determined that the first subject has no permission to access the first object to perform the first operation, it may be determined, based on that the first subject is configured to be in the enforcing mode, that the first subject is forbidden to access the first object to perform the first operation. Alternatively, the security policy may include a second rule, where the second rule indicates the first object to work in the enforcing mode. In this case, when the security policy supports the enforcing mode of the object, after it is determined that the first subject has no permission to access the first object to perform the first operation, it may be determined, based on that the first object is configured to be in the enforcing mode, that the first subject is forbidden to access the first object to perform the first operation.

In an implementation, to record the behavior that is forbidden to be performed when there is no permission in the security policy, the method may further include: generating a third log, where the third log is for recording information related to the fact that the first subject accesses the first object to perform the first operation. For example, the third log may be a system log, and recorded content may include: a security label of the first subject, a security label of the first object, the first subject being forbidden to access the first object to perform the first operation, and enforcing=1, where enforcing=1 indicates that, after the first subject is configured to be in the enforcing mode, the behavior is forbidden to be performed. Alternatively, the method may include: generating a fifth log, where the fifth log is for recording information related to the fact that the first subject accesses the first object to perform the first operation. For example, the fifth log may be a system log, and recorded content may include: a security label of the first subject, a security label of the first object, the first subject being forbidden to access the first object to perform the first operation, and enforcing=1, where enforcing=1 indicates that, after the first object is configured to be in the enforcing mode, the behavior is forbidden to be performed.

In an implementation, the security policy may be further improved through verification or testing. In an example, if it is determined, through verification or testing, that the behavior that the first subject accesses the first object to perform the first operation is a secure access behavior, and it is determined, from the security policy, that the first subject has no permission to access the first object to perform the first operation due to omission in sorting out the security policy, the security module may update the security policy, so that an updated security policy includes a third rule, where the third rule indicates that the first subject is allowed to access the first object to perform the first operation. In this way, by improving the security policy, when the behavior that the first subject accesses the first object to perform the first operation occurs again, the behavior can be accurately processed based on an improved security policy.

In an implementation, if the security module supports the enforcing mode of the object, the MAC method may further include, for example: When a second subject accesses a second object to perform a second operation, if the security module determines, based on the security policy, that the second subject has no permission to access the second object to perform the second operation, and the second object is not configured to be in the enforcing mode, the security module allows the second subject to access the second object and perform the second operation. Alternatively, if the security module supports the enforcing mode of the subject, the MAC method may further include, for example: When a second subject accesses a second object to perform a second operation, if the security module determines, based on the security policy, that the second subject has no permission to access the second object to perform the second operation, and the second subject is not configured to be in the enforcing mode, the security module allows the second subject to access the second object and perform the second operation. For example, in the security policy of the security module, some non-critical subjects or objects in the operating system may be configured to be in the enforcing mode, to implement loose access to the non-critical subjects or objects. To ensure security of the operating system, a critical subject and object (or a fully verified subject and object) may not be configured to be in the enforcing mode, to implement mandatory protection on the subject and object.

In an implementation, when the security module allows, based on that the second object or the second subject is not configured to be in the enforcing mode, the second subject to access the second object and perform the second operation, the security module may further generate a system log after allowing the second subject to access the second object and perform the second operation, where the system log is for recording information related to the fact that the second subject accesses the second object to perform the second operation.

According to a third aspect, this application provides a communication apparatus, where the communication apparatus is used in a security module in an operating system, and the communication apparatus works in an enforcing mode. The communication apparatus may include, for example, a first processing unit and a second processing unit. The first processing unit is configured to: when a first subject accesses a first object to perform a first operation, determine, based on a security policy, that the first subject has no permission to access the first object to perform the first operation, where the first object is configured to be in a permissive mode; and the second processing unit is configured to allow the first subject to access the first object and perform the first operation.

In an implementation, the security policy includes a first rule, and the first rule indicates the first object to work in the permissive mode.

In an implementation, the communication apparatus further includes a third processing unit. The third processing unit is configured to generate a first log after the first subject is allowed to access the first object and perform the first operation, where the first log is for recording information related to the fact that the first subject accesses the first object to perform the first operation.

In an implementation, the communication apparatus further includes a fourth processing unit. The fourth processing unit is configured to update the security policy, where an updated security policy includes a second rule, and the second rule indicates that the first subject is allowed to access the first object to perform the first operation.

In an implementation, the communication apparatus further includes a fifth processing unit. The fifth processing unit is configured to delete the first rule from the security policy.

**In** an implementation, the first processing unit is further configured to: when a second subject accesses a second object to perform a second operation, determine, based on the security policy, that the second subject has no permission to access the second object to perform the second operation, where the second object is not configured to be in the permissive mode; and the second processing unit is further configured to forbid the second subject to access the second object to perform the second operation.

It should be noted that, for specific implementations and achieved effects of the communication apparatus provided in the third aspect of embodiments of this application, refer to related descriptions in embodiments in the first aspect. Details are not described herein again.

According to a fourth aspect, embodiments of this application further provide another communication apparatus, where the communication apparatus is used in a security module in an operating system, and the communication apparatus works in a permissive mode. The communication apparatus may include, for example, a first processing unit and a second processing unit. The first processing unit is configured to: when a first subject accesses a first object to perform a first operation, determine, based on a security policy, that the first subject has no permission to access the first object to perform the first operation, where the first subject or the first object is configured to be in an enforcing mode; and the second processing unit is configured to forbid the first subject to access the first object to perform the first operation.

**In** an implementation, the security policy includes a first rule, and the first rule indicates the first subject to work in the enforcing mode; or the security policy includes a second rule, where the second rule indicates the first object to work in the enforcing mode.

**In** an implementation, the communication apparatus further includes a third processing unit. The third processing unit is configured to update the security policy, where an updated security policy includes a third rule, and the third rule indicates that the first subject is allowed to access the first object to perform the first operation.

**In** an implementation, the first processing unit is further configured to: when a second subject accesses a second object to perform a second operation, determine, based on the security policy, that the second subject has no permission to access the second object to perform the second operation, where the second object is not configured to be in the enforcing mode; and the second processing unit is configured to allow the second subject to access the second object and perform the second operation.

It should be noted that, for specific implementations and achieved effects of the communication apparatus provided in the fourth aspect of embodiments of this application, refer to related descriptions in embodiments in the second aspect. Details are not described herein again.

According to a fifth aspect, this application provides a communication apparatus, where the communication apparatus includes a memory and a processor; the memory is configured to store program code; and the processor is configured to run instructions in the program code, to enable the communication apparatus to perform the method according to any one of the first aspect and the implementations of the first aspect, or enable the communication apparatus to perform the method according to any one of the second aspect and the implementations of the second aspect.

According to a sixth aspect, this application provides a computer-readable storage medium, where the computer-readable storage medium stores instructions; and when the instructions are run on a computer, the computer is enabled to perform the method according to any one of the first aspect and the implementations of the first aspect, or the computer is enabled to perform the method according to any one of the second aspect and the implementations of the second aspect.

According to a seventh aspect, this application provides a computer program product, including a program, where when the program is run on a processor, the method according to any one of the first aspect and the implementations of the first aspect is implemented, or the method according to any one of the second aspect and the implementations of the second aspect is implemented.

According to an eighth aspect, this application provides a server, where the server stores program code; and when the program code is run by a processor, the method according to any one of the first aspect and the implementations of the first aspect is implemented, or the method according to any one of the second aspect and the implementations of the second aspect is implemented.

### BRIEF DESCRIPTION OF DRAWINGS

FIG. 1 is a schematic diagram of a structure of a Linux operating system 10 according to an embodiment of this application;
FIG. 2 is a schematic flowchart of an example of a MAC method according to an embodiment of this application;
FIG. 3 is a schematic flowchart of a MAC method 100 according to an embodiment of this application;
FIG. 4 is a schematic flowchart of another MAC method 200 according to an embodiment of this application;
FIG. 5 is a schematic flowchart of another MAC method 300 according to an embodiment of this application;
FIG. 6 is a schematic diagram of a structure of a communication apparatus according to an embodiment of this application; and
FIG. 7 is a schematic diagram of a structure of a communication apparatus according to an embodiment of this application.

### DESCRIPTION OF EMBODIMENTS

The following describes technical solutions in embodiments of this application with reference to accompanying drawings. A network architecture and a service scenario described in embodiments of this application are intended to describe the technical solutions in embodiments of this application more clearly, and do not constitute a limitation on the technical solutions provided in embodiments of this application. A person of ordinary skill in the art may know that the technical solutions provided in embodiments of this application are also applicable to similar technical issues as the network architecture evolves and a new service scenario emerges.

Ordinal numbers such as "1", "2", "3", "first", "second", and "third" in this application are used for distinguishing between a plurality of objects, and are not intended to limit a sequence of the plurality of objects.

It should be understood that "A and/or B" mentioned in this application includes the following cases: only A is included, only B is included, or both A and B are included.

Embodiments of this application provide a MAC method performed by a security module, to improve flexibility and security of a MAC mechanism in an operating system. The security module is integrated into an operating system that may perform MAC based on a security label (English: security label), for example, may be a security module in an operating system kernel.

For ease of understanding, the following briefly describes some technical terms in this application.

A security module is a module that can perform, based on a MAC mechanism, security hardening on an operating system in which the security module is located, and is configured to improve security protection capability of the operating system. For example, a security module in a Linux operating system may be SELinux, and for another example, a security module in an Android operating system may SEAndroid. The security module manages and controls permission for a subject to access an object to perform an operation in the operating system. Such permission restriction can effectively overcome a problem that an attack source pretends to be an operating system administrator to attack the operating system, and reduce a possibility of occurrence of a risk.

The subject may be a process in embodiments of this application. The "subject" and the "process" may be frequently used alternately in the MAC mechanism. It should be understood that the two indicate a same meaning.

The object may also be referred to as a resource in embodiments of this application, and is an object accessed by the subject. The object includes but is not limited to, a file (English: file), a dir (English: dir), a file system (English: file system), a network port, and a device.

In embodiments of this application, the operation that the subject accesses the object to perform may include but is not limited to, reading, writing, creating, querying, unmounting, mounting, and the like. For example, when the object is the file, the operation that the subject accesses the object to perform may include but is not limited to: The process accesses the file to perform at least one of reading, writing, and creating operations. For another example, when the object is the file system, the operation that the subject accesses the object to perform may include but is not limited to: The process accesses the file system to perform at least one of mounting and unmounting operations. During specific implementation, that the subject accesses the object to perform the operation may be represented by using a command line. The command line is run to start a process of "the subject accessing the object to perform the operation", and a corresponding executable file is generated, so that the security module performs MAC on that "the subject accesses the object to perform the operation".

A security policy (English: security policy) is a basis for the security module to manage and control the permission for the subject to access the object to perform the operation. The security policy includes different rules, and a type of the rule includes but is not limited to: a security label of each subject, a security label of each object, and the permission (for example, an allow (English: allow) rule) of the subject to access the object to perform an operation.

A security label (English: security label) may also be referred to as security context (English: security context), and may usually be a statement including a plurality of fields. One statement corresponds to one subject or one object, and is for describing the subject or the object corresponding to the statement. Each field in the statement specifies an attribute of the described subject or object. The security label of the subject includes but is not limited to the following attributes of the subject: a user, a role, and a subject type, and the security label of the object includes but is not limited to the following attributes of the object: a user, a role, and an object type. For example, after a /usr/bin/ftpput file is performed, a security label of a subject 1 (namely, a process ftpput) may be system_u:system_r:os_ftp_t, where system_u is a user name corresponding to the subject 1, system_r is a role name corresponding to the subject 1, and os_ftp_t is a subject type corresponding to the subject 1. Optionally, an attribute field of a security level, for example, s0:c0, corresponding to the subject 1 may be further added after the subject type. A security label of an object 1 may be system_u:object_r:os_dev_t, where system_u is a user name corresponding to the object 1, object_r is a role name corresponding to the object 1, and os_dev_t is an object type corresponding to the object 1. Optionally, an attribute field of a security level, for example, s0:c0, corresponding to the object 1 may be further added after the object type. It should be noted that, for the subject and object that may appear in the operating system, security labels corresponding to each subject and object may be defined in the security policy, to describe attributes of each subject and object. The subject type may be considered as a unified name of one or more subjects in the security policy, and each subject type may correspond to one or more subjects. Similarly, the object type may be considered as a unified name of one or more objects in the security policy, and each object type may correspond to one or more objects. One or more subject types may correspond to one role, and one or more object types may correspond to one role.

The permission for the subject to access the object to perform the operation, indicating an object type and an object class (English: Object class, which may also be understood as a specific format of an object that is allowed to be accessed) that can be accessed by the subject, and an allowed operation, may be represented by one statement including a plurality of fields. One statement corresponds to one permission for the subject to access the object to perform the operation, for describing the permission for the subject to access the object to perform the operation. An allow rule is used as an example, a format of the allow rule may be: allow subject type object type: object class{allowed operation}. For example, an allow rule 1 that corresponds to a subject 1 accessing an object 1 to perform an operation and that is included in the security policy may be: allow os_ftp_t os_dev_t: file {read write}, where allow indicates that a type of the rule 1 is access allowed, os_ftp_t is a subject type corresponding to the subject 1, os_dev_t is an object type corresponding to the object 1, file indicates that an object whose format is a common file is allowed to be accessed, and {read write} indicates that reading and writing operations are allowed to be performed. In one allow rule, at least one object class and at least one allowed operation may be included. When there are a plurality of object classes or allowed operations, the plurality of object classes or allowed operations may be written into one brace (that is, {}). It should be noted that, when a plurality of subject types have same permission (to be specific, when the plurality of subject types are mapped to different allow rules, only the subject types are different, and other content is the same), the plurality of subject types may be represented as one allow rule in the security policy to save a resource in the security policy. The allow rule may be represented as: allow subject label {subject type 1 subject type 2...} object type: object class {allowed operation}. Similarly, when a plurality of object types have same permission, the plurality of object types may be represented as one allow rule in the security policy. The allow rule may be represented as: allow subject type object label {object type 1 object type 2...}: object class {allowed operation}. Alternatively, when a plurality of object types and permission corresponding to a plurality of objects are the same, a plurality of object types may be represented as one allow rule in the security policy. The allow rule may be represented as: allow subject label {subject type 1 subject type 2...} object label {object type 1 object type 2...}: object class {allowed operation}. The foregoing subject label may be a label defined in the security module for the plurality of subject types having the same permission, and the plurality of subject types correspond to the subject label. The object label may be a label defined in the security module for the plurality of object types having the same permission, and the plurality of object types correspond to the object label. For example, a subject type os_ftp_t1 and a subject type os_ftp_t2 include related permission in the security module, and a subject label corresponding to the two subject types is defined as A. An object type os_dev_t1, an object type os_dev_t2, and an object type os_dev_t3 include related permission in the security module, and an object label corresponding to the three object types is defined as B. In addition, the security module includes one allow rule that allows the subject label A to access a resource in a file format in the subject label B to perform reading and writing operations. In this case, the allow rule may be, for example, represented as allow A{os_ftp_t1 os_ftp_t2} B{os_dev_t1 os_dev_t2 os_dev_t3}: file {read write}.

A working mode of the security module includes an enforcing (English: enforcing) mode and a permissive (English: permissive) mode. Currently, when the security module works in the enforcing mode, and the security policy has no the permission for the subject to access the object to perform the operation, the security module forbids the subject to access the object to perform the operation. For example, in the enforcing mode, when a subject 1 accesses an object 1 to perform an operation 1, the security module obtains a subject type corresponding to the subject 1 and an object type corresponding to the object 1. If no allow rule is matched in the security policy based on the obtained subject type and object type, it is determined that the subject 1 has no permission to access the object 1 to perform the operation 1. Therefore, the security module forbids the subject 1 to access the object 1 to perform the operation 1. When the security module works in the permissive mode, and the security policy has no permission for the subject to access the object to perform the operation, the security module allows the subject to access the object and perform the operation. For example, in the permissive mode, when a subject 2 accesses an object 2 to perform an operation 2, the security module obtains a subject type corresponding to the subject 2 and an object type corresponding to the object 2. If no allow rule is matched in the security policy based on the obtained subject type and object type, it is determined that the subject 2 has no permission to access the object 2 to perform the operation 2. However, the security module allows the subject 2 to access the object 2 and perform the operation 2. It should be noted that, in the enforcing mode and the permissive mode, when determining that the subject has no permission to access the object to perform the operation, the security module generates a corresponding log, and records information related to the fact that the subject accesses the object to perform the operation. For example, content recorded in the generated log may include but is not limited to: a security label of the subject, a security label of the object, and a status of a current MAC task (which subject accesses which object and which operation is performed), and an execution result of the MAC task (whether the task is allowed or rejected). The generated log may be a system log, for example, an access vector cache (English: access vector cache, avc for short) log, and may be stored in a system audit (English: audit) log file.

**In** a current MAC mechanism, a working mode of the security module can be considered as an operating system-level "main switch". A status of the "main switch" affects all decisions in a case in which the permission for the subject to access object to perform the operation is not matched in the security policy. This requires that the security policy sorted out in an early stage be absolutely comprehensive and accurate. Otherwise, a control granularity of the operating system-level "main switch" is coarse. This affects security of the operating system and normal running of a service. Based on this, embodiments of this application provide a more flexible and secure MAC method, so that a specific control manner can be refined in the operating system-level "main switch".

As a communication apparatus in which an operating system is located becomes more complex, it is difficult for a sorted security policy to include all corresponding rules that should have the permission for the subject to access the object to perform the operation. Consequently, currently, when the security module is in the enforcing mode, in many cases, the MAC mechanism of "rejecting all access" may not improve the security of the operating system, and may interrupt normally running service.

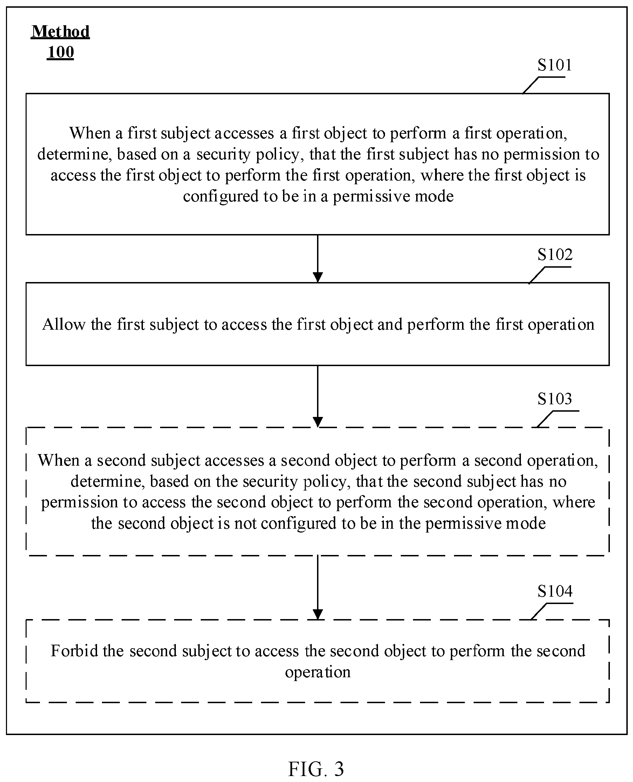

**In** a first possible implementation of embodiments of this application, a flexible and secure MAC manner is provided, to resolve a problem that exists in the current MAC mechanism when the security module works in the enforcing mode. **In** the MAC manner, for the security module working in the enforcing mode, the permissive mode can be configured for some objects in the security policy based on actual requirements. **In** this way, when the subject accesses the object to perform the operation, the security module determines, based on the security policy, that the subject has no permission to access the object to perform the operation. If the object is configured to be in the permissive mode, the subject is allowed to access the object and perform the operation. In this way, when the status of the "main switch" is the enforcing mode, the security module flexibly determines, based on whether the permissive mode is configured for the object, whether a behavior that the subject accesses the object to perform the operation needs to be allowed or rejected. This improves the flexibility and security of the MAC mechanism. Even if the communication apparatus in which the operating system is located is complex, and the sorted security policy omits the permission for the subject to access the object to perform the operation, the object may be configured to be in the permissive mode to ensure that the subject can access the object and perform the operation, to ensure that a service including that the subject accesses the object to perform the operation runs normally and is not interrupted. Moreover, in the MAC method, the security module may sort out the security policy based on the object, and set an object that needs to open permission to the permissive mode, and there is no need to comprehensively sort out, into the security policy, all the permission for the subject to access the object to perform the operation, to reduce workload of sorting out the security policy. It should be noted that, for related descriptions of a specific implementation of the MAC method provided in this implementation and a technical effect achieved, refer to the following method 100 shown in FIG. 3.

In addition, currently, when the security module is in the permissive mode, the MAC mechanism of "allowing all access" deviates from a security hardening effect on the operating system implemented by the security module managing and controlling the permission for the subject to access the object to perform the operation, and the security of the operating system cannot be ensured.

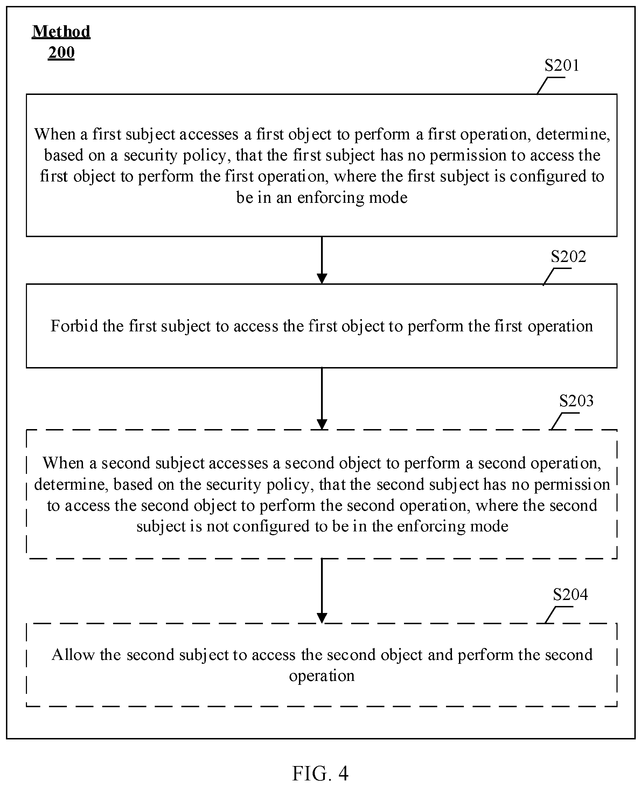

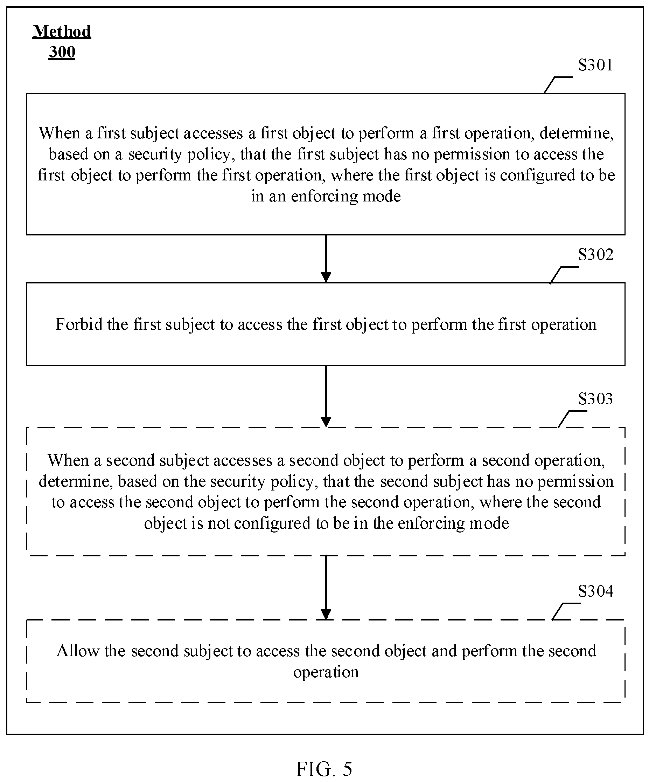

In a second possible implementation of embodiments of this application, a flexible and secure MAC manner is provided, to resolve a problem that exists in the current MAC mechanism when the security module works in the permissive mode. In the MAC manner, for the security module working in the permissive mode, the enforcing mode can be configured for some subjects or objects in the security policy based on actual requirements. When the subject accesses the object to perform the operation, the security module determines, based on the security policy, that the subject has no permission to access the object to perform the operation. If the subject or object is configured to be in the enforcing mode, the subject is forbidden to access the object and perform the operation. In this way, when the status of the "main switch" is the permissive mode, the security module flexibly determines, based on whether the enforcing mode is configured for the subject or object, whether a behavior that the subject accesses the object to perform the operation needs to be allowed or rejected. This improves flexibility and security of the MAC mechanism. In addition, in the MAC method, the security module may sort out the security policy based on the object or the subject, and set a subject or an object that needs to be forbidden forcibly to be in the enforcing mode, to ensure a security hardening function of the security module on the operating system, and there is no need to comprehensively sort out, into the security policy, all permission for the subject to access the object to perform the operation, to reduce workload of sorting out the security policy. It should be noted that, for related descriptions of a specific implementation of the MAC method provided in this implementation and a technical effect achieved, refer to a method 200 shown in FIG. 4 and a method 300 shown in FIG. 5 below.

It should be noted that the security module provided in embodiments of this application may be integrated into the operating system. For example, the operating system may be installed on a board of a network apparatus. One network communication apparatus may include at least one board. For example, the network apparatus may be a router, a switch, a firewall, or an internet of things (English: Internet of Things, IoT for short) terminal. Alternatively, the security module provided in embodiments of this application may be a to-be-integrated program product or a computer-readable storage medium, and is integrated into the operating system when a user has a requirement for performing security hardening on the operating system. Alternatively, the security module provided in embodiments of this application may be program code stored in a server, and is downloaded from the server and is integrated into the operating system when the user has a requirement for performing security hardening on the operating system, to implement security hardening on the operating system.

The communication apparatus mentioned in embodiments of this application may be a network device such as a switch, a router, a firewall, or an IoT terminal, may be a part of components on a network device, for example, a board or a line card on the network device, may be a functional module on a network device, or may be a chip for implementing the method in this application. This is not specifically limited in embodiments of this application.

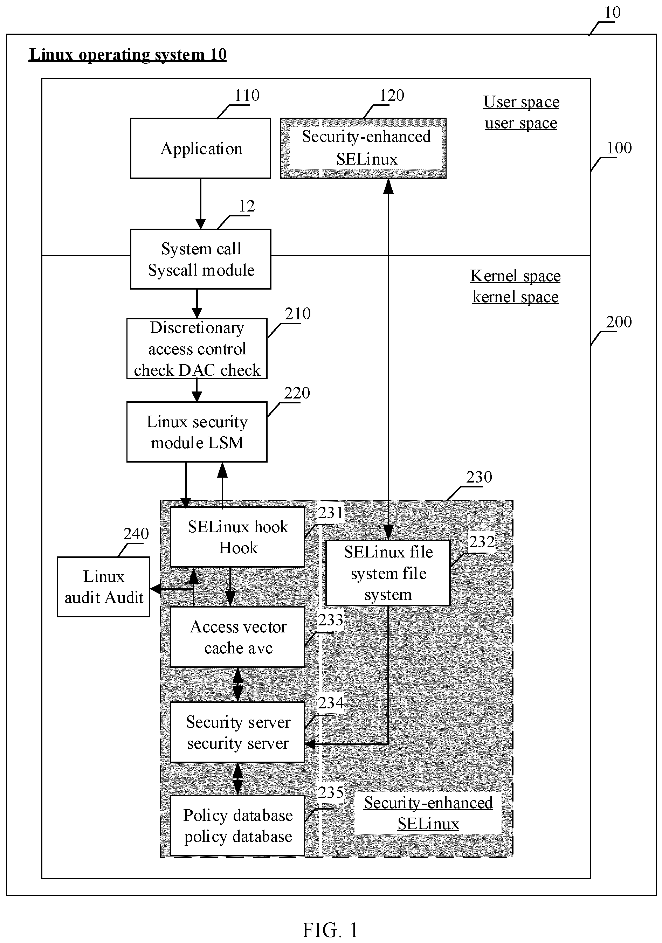

For example, a security mode is SELinux. FIG. 1 is a schematic diagram of an architecture of a Linux operating system 10 according to an embodiment of this application. Refer to FIG. 1. The Linux operating system 10 may include user space (English: user space) 100 and kernel space (English: kernel space) 200. The user space 100 may include an application (English: application, App for short) 110 and an SELinux policy management unit 120, and the kernel space 200 may include a discretionary access control check (English: discretionary access control check, DAC Check for short) 210, a Linux security module (English: Linux security module, LSM for short) 220, SELinux 230 and Linux audit (English: Audit) 240. The kernel space 200 and the user space 100 include a system call (English: Syscall) module 12. The LSM 220 allows a security module to enter a kernel in a form of a plug-in, and provides a set of hooks in a kernel call logic. A hook may be a function interface for permission check. The DAC Check 210 is for performing a DAC mechanism. The DAC mechanism may be understood as that an identity of a subject and a group to which the subject belongs restrict access to an object, and a subject having access permission grants the access permission to another subject, and management and control on the permission are loose.

The security module in the Linux operating system 10 not only includes the SELinux policy management unit 120, but also includes the SELinux 230. The SELinux 230 may include an SELinux hook (English: Hook) 231, an SELinux file system (English: file system) 232, an access vector cache (English: access vector cache, avc for short) 233, a security server (English: security server) 234, and a policy database (English: policy database) 235. During specific implementation, a security policy may be defined in the SELinux policy management unit 120, and may be loaded to the policy database 235 via the SELinux file system 232 and the security server 234.

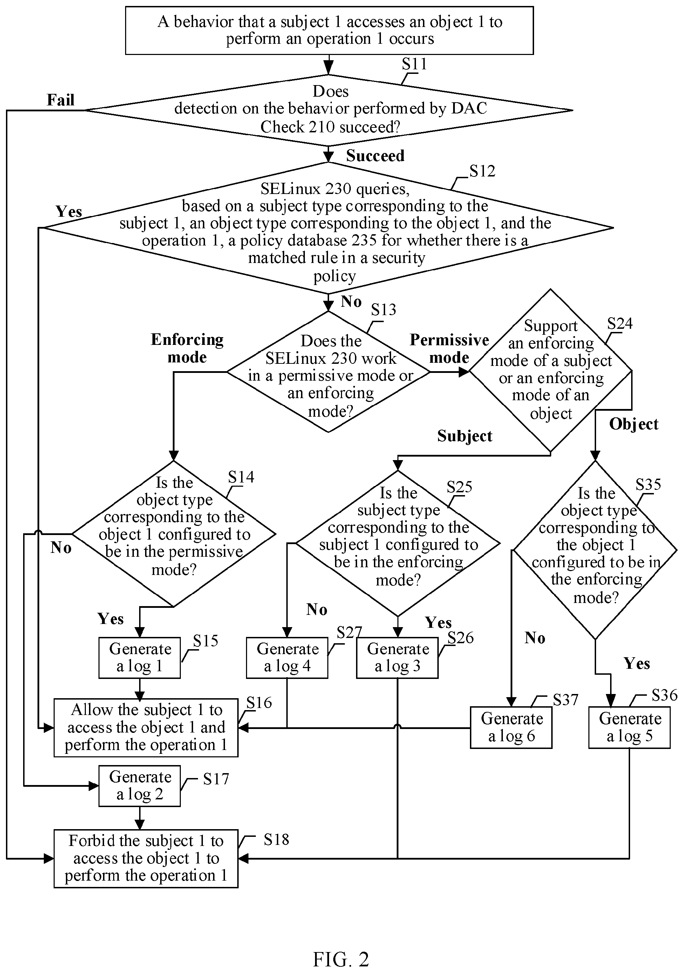

In an example, if a behavior that a subject 1 accesses an object 1 to perform an operation 1 occurs, for a MAC process of the Linux operating system 10, refer to FIG. 2. For example, the following steps may be included. S11: The DAC Check 210 detects the behavior. If the detection on the behavior succeeds, S12 is performed. If the detection on the behavior fails, S18 is performed. S12: The SELinux 230 queries, based on a subject type corresponding to the subject 1, an object type corresponding to the object 1, and the operation 1, the policy database 235 for whether there is a matched rule in the security policy. If there is a matched rule, S16 is performed. If there is no matched rule, S13 is performed. S13: Determine whether the SELinux 230 works in a permissive mode or an enforcing mode. If the SELinux 230 works in the enforcing mode, S14 is performed. If the SELinux 230 works in the permissive mode, perform S24 is performed. When the SELinux 230 works in the enforcing mode, S14: Determine whether the object type corresponding to the object 1 is configured to be in the permissive mode. If the object type corresponding to the object 1 is configured to be in the permissive mode, S15 and S16 are performed. If the object type corresponding to the object 1 is not configured to be in the permissive mode, S17 and S18 are performed. S15: Generate a log 1, where content recorded in the log 1 may include, for example, a security label of the subject 1, a security label of the object 1, the subject 1 being allowed to access the object 1 to perform the operation 1, and permissive=1 (indicating that, after the object 1 is configured to be in the permissive mode, the subject 1 is allowed to access the object 1 to perform the operation). S16: Allow the subject 1 to access the object 1 and perform the operation 1. S17: Generate a log 2, where content recorded in the log 2 may include, for example, a security label of the subject 1, a security label of the object 1, the subject 1 being forbidden to access the object 1 to perform the operation 1, and permissive=0 (indicating that the object 1 is not configured to be in the permissive mode, and the subject 1 is forbidden to access the object 1). S18: Forbid the subject 1 to access the object 1 to perform the operation 1. When the SELinux 230 works in the permissive mode, S24: Determine whether an enforcing mode of the subject or an enforcing mode of the object is supported. If the enforcing mode of the subject is supported, S25 is performed. If the enforcing mode of the object is supported, S35 is performed. For supporting the enforcing mode of the subject, S25: Determine whether the subject type corresponding to the subject 1 is configured to be in the enforcing mode. If the subject type corresponding to the subject 1 is configured to be in the enforcing mode, S26 and S18 are performed. If the subject type corresponding to the subject 1 is not configured to be in the enforcing mode, S27 and S16 are performed. S26: Generate a log 3, where content recorded in the log 3 may include, for example, a security label of the subject 1, a security label of the object 1, the subject 1 being forbidden to access the object 1 to perform the operation 1, and enforcing=1 (indicating that, after the subject 1 is configured to be in the enforcing mode, the subject 1 is forbidden to access the object 1 to perform the operation 1). S27: Generate a log 4, where content recorded in the log 4 may include, for example, a security label of the subject 1, a security label of the object 1, the subject 1 being allowed to access the object 1 to perform the operation 1, and enforcing=0 (indicating that the subject 1 is not configured to be in the enforcing mode, and the subject 1 is allowed to access the object 1 to perform the operation 1). For supporting the enforcing mode of the object, S35: Determine whether the object type corresponding to the object 1 is configured to be in the enforcing mode. If the object type corresponding to the object 1 is configured to be in the enforcing mode, S36 and S18 are performed. If the object type corresponding to the object 1 is not configured to be in the enforcing mode, S37 and S16 are performed. S36: Generate a log 5, where content recorded in the log 5 may include, for example, a security label of the subject 1, a security label of the object 1, the subject 1 being forbidden to access the object 1 to perform the operation 1, and enforcing=1 (indicating that, after the object 1 is configured to be in the enforcing mode, the subject 1 is forbidden to access the object 1 to perform the operation 1). S37: Generate a log 6, where content recorded in the log 6 may include, for example, a security label of the subject 1, a security label of the object 1, the subject 1 being allowed to access the object 1 to perform the operation 1, and enforcing=0 (indicating that the object 1 is not configured to be in the enforcing mode, and the subject 1 is allowed to access the object 1 to perform the operation 1).

FIG. 1 and the foregoing MAC process in embodiments of this application are merely shown as possible examples for ease of understanding related content mentioned in embodiments of this application, and do not constitute a limitation on embodiments of this application.

The following describes a MAC method provided in embodiments of this application with reference to the accompanying drawings. The following method may be performed by a security module of an operating system, where the operating system may be an operating system that performs MAC based on a security label. For example, the operating system is a Linux-based operating system, and a security module integrated into the operating system may be SELinux. For another example, the operating system is an Android-based operating system, and a security module integrated into the operating system may be SEAndroid. For another example, the operating system is an Apple (iOS for short)-based operating system, and a security module integrated into the operating system may be SEiOS.

Corresponding to the first possible implementation, embodiments of this application provide a MAC method 100. FIG. 3 is a schematic flowchart of a MAC method 100 according to an embodiment of this application. A security module that performs the method 100 works in an enforcing mode, and supports a permissive mode of an object. The MAC method 100 may be performed, for example, by the SELinux 230 in the Linux operating system 10 in FIG. 1. Refer to FIG. 3. For example, the method 100 may include S101 and S102.

S101: When a first subject accesses a first object to perform a first operation, determine, based on a security policy, that the first subject has no permission to access the first object to perform the first operation, where the first object is configured to be in a permissive mode.

S102: Allow the first subject to access the first object and perform the first operation.

The security policy may further include a rule for configuring an object type corresponding to the object to be in the permissive mode. It is assumed that an object type corresponding to the first object is os_dev_t. The security policy may include a first rule. For example, the first rule may be permissive os_dev_t, indicating all objects corresponding to os_dev_t to work in the permissive mode, for example, indicating the first object to work in the permissive mode.

During specific implementation, when the first subject accesses the first object to perform the first operation, a subject type corresponding to the first subject and the object type corresponding to the first object may be first obtained. Then, whether there is permission matching a behavior that the first subject accesses the first object to perform the first operation is checked from permission that is included in the security policy and that is for a subject to access the object to perform an operation. If there is the permission matching the behavior that the first subject accesses the first object to perform the first operation, the first subject is allowed to access the first object and perform the first operation. If there is no permission matching the behavior that the first subject accesses the first object to perform the first operation, it may be determined that the first subject has no permission to access the first object to perform the first operation. In this case, whether the first rule is included in the security policy is checked. If the first rule is included in the security policy, it may be determined that the first object is configured to be in the permissive mode, and S102 is performed. If the first rule is not included in the security policy, it may be determined that the first object is not configured to be in the permissive mode, and MAC is performed on the behavior based on a "main switch" of the security module, in other words, the first subject is forbidden to access the first object to perform the first operation.

The permission matching the behavior that the first subject accesses the first object to perform the first operation may indicate that, in permission for a subject to access an object to perform an operation in the security policy, a subject type is the subject type corresponding to the first subject, an object type is the object type corresponding to the first object, an object class includes a format of the first object, and an operation allowed to be performed includes the first operation.

That the first object is configured to be in the permissive mode may indicate that the object type corresponding to the first object is configured to be in the permissive mode. During specific implementation, whether the security policy includes a first rule corresponding to the obtained object type of the first object may be checked. If the security policy includes the first rule corresponding to the obtained object type of the first object, it is considered that the first object is configured to be in the permissive mode.

For example, in the security policy of the security module, some non-critical objects in an operating system may be configured to be in the permissive mode, to implement loose access to the non-critical object. To ensure security of the operating system, a critical object or fully verified object may not be configured to be in the permissive mode, to implement mandatory protection on the object.

It should be noted that, an object type corresponding to some objects may be configured to be in the permissive mode in the security policy, so that the subject is allowed to access the objects when the security module works in an enforcing mode. This can avoid a problem that a service that is originally running securely is forcibly interrupted because permission that is sorted out in the security policy and that is for the subject to access the object to perform the operation is incomplete.

Although S102 may be performed on some objects configured to be in the permissive mode, to record the behavior that is allowed to be performed when there is no permission in the security policy, after S102, the method 100 may further include: generating a first log, where the first log is for recording information related to the fact that the first subject accesses the first object to perform the first operation. For example, the first log may be a system log, and recorded content may include: a security label of the first subject, a security label of the first object, the first subject being allowed to access the first object to perform the first operation, and permissive=1, where permissive=1 indicates that, after the first object is configured to be in the permissive mode, the behavior is allowed to be performed.

For the behavior that the first subject accesses the first object to perform the first operation, after S102, the security policy may be further improved through verification or testing to process the exception, so that when the behavior that the first subject accesses the first object to perform the first operation occurs again, the behavior can be accurately processed based on an improved security policy.

In an example, if it is determined, through verification or testing, that the behavior that the first subject accesses the first object to perform the first operation is a secure access behavior, and it is determined, from the security policy, that the first subject has no permission to access the first object to perform the first operation due to omission in sorting out the security policy, the security module may update the security policy, so that an updated security policy includes a second rule, where the second rule indicates that the first subject is allowed to access the first object to perform the first operation. For example, the security policy existing before the updating does not include the second rule, and the second rule is added to the updated security policy. The second rule may be: allow the subject type of the first subject the object type of the first object: the object class of the first object the first operation. For another example, the security policy existing before the updating includes a rule corresponding to the permission for the first subject to access the first object, but an allowed operation type does not include the first operation. In this case, the existing rule corresponding to the permission for the first subject to access the first object may be updated in the updated security policy, and the updated rule is recorded as the second rule, where the second rule may be: allow the subject type of the first subject the object type of the first object: the object class of the first object {an operation that is allowed to be performed before the update the first operation}.

In another example, if it is determined, through verification or testing, that the behavior that the first subject accesses the first object to perform the first operation is an insecure attack behavior, for security purposes, the first rule may be deleted from the security policy. In this way, when the behavior that the first subject accesses the first object to perform the first operation occurs again, it is determined, based on the security policy, that the first subject has no permission to access the first object to perform the first operation, and it may be determined that the first object is not configured to be in the permissive mode, so that the first subject is forbidden to access the first object to perform the first operation, to ensure the security of the operating system.

Optionally, the method 100 may further include, for example, S103 and S104.

S103: When a second subject accesses a second object to perform a second operation, determine, based on the security policy, that the second subject has no permission to access the second object to perform the second operation, where the second object is not configured to be in the permissive mode.

S104: Forbid the second subject to access the second object to perform the second operation.

To record the behavior that is allowed to be performed when there is no permission in the security policy, after S104, the method 100 may further include: generating a second log, where the second log is for recording information related to the fact that the second subject accesses the second object to perform the second operation. For example, the second log may be a system log, and recorded content may include: a security label of the second subject, a security label of the second object, the second subject being allowed to access the second object to perform the second operation, and permissive=0, where permissive=0 indicates that the second object is not configured to be in the permissive mode and the behavior is forbidden to be performed.

It can be learned that in the method 100, when a status of the "main switch" is the enforcing mode, the security module flexibly determines, based on whether the permissive mode is configured for the object, whether the behavior that the subject accesses the object to perform the operation needs to be allowed or rejected. This improves flexibility and security of a MAC mechanism. Even if a communication apparatus in which the operating system is located is complex, and the sorted security policy omits the permission for the subject to access the object to perform the operation, the object may be configured to be in the permissive mode to ensure that the subject can access the object and perform the operation, to ensure that a service including that the subject accesses the object to perform the operation runs normally and is not interrupted. Moreover, in the MAC method, the security module may sort out the security policy based on the object, and set an object that needs to open permission to be in the permissive mode, and there is no need to comprehensively sort out, into the security policy, all the permission for the subject to access the object to perform the operation, to reduce workload of sorting out the security policy.

In comparison with a current MAC mechanism in which the security module works in the enforcing mode and configures the permissive mode for some subjects, the MAC method 100 provided in the method 100 is applicable to a complex case in which the subject accesses the object to perform the operation, and can flexibly and securely implement MAC for a large operating system. In addition, in this embodiment of this application, when the security module works in the enforcing mode, the permissive mode of the subject or the permissive mode of the object may be supported based on an actual requirement. The MAC method is more flexible, and use of the security module is more friendly for a user.

It should be noted that, to avoid a case in which MAC cannot be implemented on an access behavior due to a conflict between modes configured for a subject and an object of the access behavior, only a permissive mode of the subject or a permissive mode of the object can be supported, and the permissive mode of the subject and the permissive mode of the object cannot be supported at the same time.

Corresponding to the second possible implementation, embodiments of this application provide a MAC method 200 and a MAC method 300. A security module of the MAC method 200 works in a permissive mode, and the security module that performs the method 200 supports an enforcing mode of a subject. A security module of the MAC method 300 works in a permissive mode, and the security module that performs the method 300 supports an enforcing mode of an object. It should be noted that, to avoid a case in which MAC cannot be implemented on an access behavior due to a conflict between modes configured for a subject and an object of the access behavior, only an enforcing mode of the subject or an enforcing mode of the object can be supported, and the enforcing mode of the subject and the enforcing mode of the object cannot be supported at the same time.

FIG. 4 is a schematic flowchart of a MAC method 200 according to an embodiment of this application. The security module in the method 200 works in the permissive mode, and supports the enforcing mode of the subject. The MAC method 200 may be performed, for example, by the SELinux 230 in the Linux operating system 10 in FIG. 1. Refer to FIG. 4. For example, the method 200 may include S201 to S202.

S201: When a first subject accesses a first object to perform a first operation, determine, based on a security policy, that the first subject has no permission to access the first object to perform the first operation, where the first subject is configured to be in an enforcing mode.

S202: Forbid the first subject to access the first object to perform the first operation.

The security policy may include a first rule, and the first rule indicates the first subject to work in the enforcing mode. It is assumed that a subject type corresponding to the first subject is os_ftp_t, and the security policy may include the first rule. For example, the first rule may be enforcing os_ftp_t, indicating that all subjects corresponding to os_ftp_t work in the enforcing mode.

During specific implementation, when the first subject accesses the first object to perform the first operation, the subject type corresponding to the first subject and an object type corresponding to the first object may be first obtained. Then, whether there is permission matching a behavior that the first subject accesses the first object to perform the first operation is checked from permission that is included in the security policy and that is for a subject to access an object to perform an operation. If there is the permission matching the behavior that the first subject accesses the first object to perform the first operation, the first subject is allowed to access the first object and perform the first operation. If there is no permission matching the behavior that the first subject accesses the first object to perform the first operation, it may be determined that the first subject has no permission to access the first object to perform the first operation. In this case, whether the first rule is included in the security policy is checked. If the first rule is included in the security policy, it may be determined that the first subject is configured to be in the enforcing mode, and S202 is performed. If the first rule is not included in the security policy, it may be determined that the first subject is not configured to be in the enforcing mode, and MAC is performed on the behavior based on a "main switch" of the security module, in other words, the first subject is allowed to access the first object and perform the first operation.

That the first subject is configured to be in the enforcing mode may indicate that the subject type corresponding to the first subject is configured to be in the enforcing mode. During specific implementation, whether the security policy includes a first rule corresponding to the obtained subject type of the first subject may be checked. If the security policy includes the first rule corresponding to the obtained subject type of the first subject, it is considered that the first subject is configured to be in the enforcing mode.

For example, in the security policy of the security module, some critical subjects or fully verified subjects in an operating system may be configured to be in the enforcing mode, to implement mandatory protection on the critical subjects or fully verified subjects; and non-critical subjects may not be configured to be in the enforcing mode, to implement loose access to the non-critical subjects.

It should be noted that, a subject type corresponding to some subjects may be configured to be in the enforcing mode in the security policy, so that the subjects are not allowed to access the object when the security module works in the permissive mode. This can effectively improve security of the operating system.

Although S202 may be performed on some subjects configured to be in the enforcing mode, to record the behavior that is forbidden to be performed when there is no permission in the security policy, after S202, the method 200 may further include: generating a third log, where the third log is for recording information related to the fact that the first subject accesses the first object to perform the first operation. For example, the third log may be a system log, and recorded content may include: a security label of the first subject, a security label of the first object, the first subject being forbidden to access the first object to perform the first operation, and enforcing=1, where enforcing=1 indicates that, after the first subject is configured to be in the enforcing mode, the behavior is forbidden to be performed.

For the behavior that the first subject accesses the first object to perform the first operation, after S202, the security policy may be further improved through verification or testing to process the exception, so that when the behavior that the first subject accesses the first object to perform the first operation occurs again, the behavior can be accurately processed based on an improved security policy. **In** an example, if it is determined, through verification or testing, that the behavior that the first subject accesses the first object to perform the first operation is a secure access behavior, and it is determined, from the security policy, that the first subject has no permission to access the first object to perform the first operation due to omission in sorting out the security policy, the security module may update the security policy, so that an updated security policy includes a third rule, where the third rule indicates that the first subject is allowed to access the first object to perform the first operation.

Optionally, the method 200 may further include, for example, S203 and S204.

S203: When a second subject accesses a second object to perform a second operation, determine, based on the security policy, that the second subject has no permission to access the second object to perform the second operation, where the second subject is not configured to be in the enforcing mode.

S204: Allow the second subject to access the second object and perform the second operation.

To record the behavior that is allowed to be performed when there is no permission in the security policy, after S204, the method 200 may further include: generating a fourth log, where the fourth log is for recording information related to the fact that the second subject accesses the second object to perform the second operation. For example, the fourth log may be a system log, and recorded content may include: a security label of the second subject, a security label of the second object, the second subject being allowed to access the second object to perform the second operation, and enforcing=0, where enforcing=0 indicates that the second subject is not configured to be in the enforcing mode and the behavior is allowed to be performed.

It can be learned that in the method 200, when a status of the "main switch" is the permissive mode, the security module flexibly determines, based on whether the enforcing mode is configured for the subject, whether the behavior that the subject accesses the object to perform the operation needs to be allowed or rejected. This improves flexibility and security of a MAC mechanism. In addition, in the MAC method, the security module may sort out the security policy based on the subject, and set a subject that needs to be forbidden forcibly to be in the enforcing mode, to ensure a security hardening function of the security module on the operating system, and there is no need to comprehensively sort out, into the security policy, all permission for the subject to access the object to perform the operation, to reduce workload of sorting out the security policy.

FIG. 5 is a schematic flowchart of a MAC method 300 according to an embodiment of this application. A security module in the method 300 works in a permissive mode, and supports an enforcing mode of an object. The MAC method 300 may be performed, for example, by the SELinux 230 in the Linux operating system 10 in FIG. 1. Refer to FIG. 5. For example, the method 300 may include S301 and S302.

S301: When a first subject accesses a first object to perform a first operation, determine, based on a security policy, that the first subject has no permission to access the first object to perform the first operation, where the first object is configured to be in an enforcing mode.

S302: Forbid the first subject to access the first object to perform the first operation.

Alternatively, the security policy includes a second rule, where the second rule indicates the first object to work in the enforcing mode.

The security policy may include a second rule, where the second rule indicates the first object to work in the enforcing mode. It is assumed that an object type corresponding to the first object is os_dev_t, and the security policy may include the second rule. For example, the second rule may be enforcing os_dev_t, indicating that all objects corresponding to os_dev_t work in the enforcing mode.

During specific implementation, when the first subject accesses the first object to perform the first operation, a subject type corresponding to the first subject and the object type corresponding to the first object may be first obtained. Then, whether there is permission matching a behavior that the first subject accesses the first object to perform the first operation is checked from permission that is included in the security policy and that is for a subject to access an object to perform an operation. If there is the permission matching the behavior that the first subject accesses the first object to perform the first operation, the first subject is allowed to access the first object and perform the first operation. If there is no permission matching the behavior that the first subject accesses the first object to perform the first operation, it may be determined that the first subject has no permission to access the first object to perform the first operation. In this case, whether the second rule is included in the security policy is checked. If the second rule is included in the security policy, it may be determined that the first object is configured to be in the enforcing mode, and S302 is performed. If the second rule is not included in the security policy, it may be determined that the first object is not configured to be in the enforcing mode, and MAC is performed on the behavior based on a "main switch" of the security module, in other words, the first subject is forbidden to access the first object to perform the first operation.

That the first object is configured to be in the enforcing mode may indicate that the object type corresponding to the first object is configured to be in the enforcing mode. During specific implementation, whether the security policy includes a second rule corresponding to the obtained object type of the first object may be checked. If the security policy includes the second rule corresponding to the obtained object type of the first object, it is considered that the first object is configured to be in the enforcing mode.

For example, in the security policy of the security module, some critical objects or fully verified objects in an operating system may be configured to be in the enforcing mode, to implement mandatory protection on the critical objects or fully verified objects; and non-critical objects may not be configured to be in the enforcing mode, to implement loose access to the non-critical objects.

It should be noted that, an object type corresponding to some objects may be configured to be in the enforcing mode in the security policy, so that the subject is not allowed to access the objects when the security module works in the permissive mode. This can effectively improve security of the operating system.

Although S302 may be performed on some objects configured to be in the enforcing mode, to record the behavior that is forbidden to be performed when there is no permission in the security policy, after S302, the method 300 may further include: generating a fifth log, where the fifth log is for recording information related to the fact that the first subject accesses the first object to perform the first operation. For example, the fifth log may be a system log, and recorded content may include: a security label of the first subject, a security label of the first object, the first subject being forbidden to access the first object to perform the first operation, and enforcing=1, where enforcing=1 indicates that, after the first object is configured to be in the enforcing mode, the behavior is forbidden to be performed.

For the behavior that the first subject accesses the first object to perform the first operation, after S302, the security policy may be further improved through verification or testing to process the exception, so that when the behavior that the first subject accesses the first object to perform the first operation occurs again, the behavior can be accurately processed based on an improved security policy. **In** an example, if it is determined, through verification or testing, that the behavior that the first subject accesses the first object to perform the first operation is a secure access behavior, and it is determined, from the security policy, that the first subject has no permission to access the first object to perform the first operation due to omission in sorting out the security policy, the security module may update the security policy, so that an updated security policy includes a third rule, where the third rule indicates that the first subject is allowed to access the first object to perform the first operation.

Optionally, the method 300 may further include, for example, S303 and S304.

S303: When a second subject accesses a second object to perform a second operation, determine, based on the security policy, that the second subject has no permission to access the second object to perform the second operation, where the second object is not configured to be in the enforcing mode.

S304: Allow the second subject to access the second object and perform the second operation.

To record the behavior that is allowed to be performed when there is no permission in the security policy, after S304, the method 300 may further include: generating a sixth log, where the sixth log is for recording information related to the fact that the second subject accesses the second object to perform the second operation. For example, the sixth log may be a system log, and recorded content may include: a security label of the second subject, a security label of the second object, the second subject being allowed to access the second object to perform the second operation, and enforcing=0, where enforcing=0 indicates that the second object is not configured to be in the enforcing mode and the behavior is allowed to be performed.

It can be learned that in the method 300, when a status of the "main switch" is the permissive mode, the security module flexibly determines, based on whether the enforcing mode is configured for the object, whether the behavior that the subject accesses the object to perform the operation needs to be allowed or rejected. This improves flexibility and security of a MAC mechanism. In addition, in the MAC method, the security module may sort out the security policy based on the object, and set an object that needs to be forbidden forcibly to be in the enforcing mode, to ensure a security hardening function of the security module on the operating system, and there is no need to comprehensively sort out, into the security policy, all permission for the subject to access the object to perform the operation, to reduce workload of sorting out the security policy.

In this embodiment of this application, when the security module works in the permissive mode, the enforcing mode of the subject or the enforcing mode of the object may be supported based on an actual requirement. The MAC method is more flexible, and use of the security module is more friendly for a user.

To describe embodiments of this application more clearly and intuitively, the following uses a specific example in an SELinux scenario for description.

In an example, a security module works in an enforcing mode, and supports a permissive mode of an object. A security policy includes:
system_u:system_r:os_ftp_a; //security context of a subject type a, where the subject type a corresponds to at least a subject 1;
system _u:object_r:os_dev_A; //security context of an object type A, where the object type A corresponds to at least an object 1;
system_u:object_r:os_dev_B; //security context of an object type B, where the object type B corresponds to at least an object 2;
system_u:object_r:os_dev_C; //security context of an object type C, where the object type C corresponds to at least an object 3;
allow os_ftp_a os_dev_C: filesystem{mount umount}//allowing os_ftp_a to access an object in a filesystem format in os_dev_B to perform reading and writing operations;
allow os_ftp_a os_dev_B: file{read write}//allowing os_ftp_a to access an object in a file format in os_dev_C to perform mounting and unmounting operations;
permissive os_dev_A; //setting the object type os_dev_A to be in the permissive mode; and
permissive os_dev_C; //setting the object type os_dev_C to be in the permissive mode.

In this case, in this example, a MAC process performed when the subject 1 accesses the object 1 to perform the reading operation may include: The security module first determines that a subject type corresponding to the subject 1 is os_ftp_a, and determines that an object type corresponding to the object 1 is os_dev_A; determines, based on the security policy, that there is no rule matching os_ftp_a and os_dev_A, to determine that the subject 1 has no permission to access the object 1 to perform the reading operation; matches, based on the security policy, rule permissive os_dev_A, where in the rule, the object type corresponding to the object 1 is configured to be in the permissive mode; and allows, according to the matched rule, the subject 1 to access the object 1 and perform the reading operation.

In another example, a security module works in a permissive mode and supports an enforcing mode of a subject. A security policy includes:
system_u:system_r:os_ftp_a; //security context of a subject type a, where the subject type a corresponds to at least a subject 1;
system_u:system_r:os_ftp_b; //security context of a subject type b, where the subject type b corresponds to at least a subject 2;
system_u:object_r:os_dev_A; //security context of an object type A, where the object type A corresponds to at least an object 1;
system _u:object_r:os_dev_B; //security context of an object type B, where the object type B corresponds to at least an object 2;
system_u:object_r:os_dev_C; //security context of an object type C, where the object type C corresponds to at least an object 3;
allow os_ftp_a os_dev_C: filesystem{mount umount}//allowing os_ftp_a to access an object in a filesystem format in os_dev_B to perform reading and writing operations;
allow os_ftp_a os_dev_B: file{read write}//allowing os_ftp_a to access an object in a file format in os_dev_C to perform mounting and unmounting operations; and
enforcing os_ftp_a//setting the subject type os_ftp_a to be in the enforcing mode.

In this case, in this example, a MAC process performed for the subject 1 to access the object 2 to perform a query operation may include: The security module first determines that a subject type corresponding to the subject 1 is os_ftp_a, and determines that an object type corresponding to the object 2 is os_dev_B; because a rule for matching os_ftp_a and os_dev_B in the security policy is allow os_ftp_a os_dev_B: file{read write}, in other words, an operation that the subject 1 is allowed to perform on the object 2 does not include the query operation, determines that the subject 1 has no permission to access the object 2 to perform the query operation; further determines that the security policy includes a rule enforcing os_ftp_a matching the subject 1, where in the rule, the subject type corresponding to the subject 1 is configured to be in the enforcing mode; and forbids, according to the rule, the subject 1 to access the object 2 to perform the query operation.

In still another example, if a security module works in a permissive mode and supports an enforcing mode of an object, a security policy includes:
system_u:system_r:os_ftp_a; //security context of a subject type a, where the subject type a corresponds to at least a subject 1;
system_u:system_r:os_ftp_b; //security context of a subject type b, where the subject type b corresponds to at least a subject 2;
system _u:object_r:os_dev_A; //security context of an object type A, where the object type A corresponds to at least an object 1;
system_u:object_r:os_dev_B; //security context of an object type B, where the object type B corresponds to at least an object 2;
system_u:object_r:os_dev_C; //security context of an object type C, where the object type C corresponds to at least an object 3;
allow os_ftp_a os_dev_C: filesystem{mount umount}//allowing os_ftp_a to access an object in a filesystem format in os_dev_B to perform reading and writing operations;
allow os_ftp_a os_dev_B: file{read write}//allowing os_ftp_a to access an object in a file format in os_dev_C to perform mounting and unmounting operations; and
enforcing os_dev_B//setting the object type os_dev_B to be in the enforcing mode.

In this case, in this example, a MAC process performed for that the subject 2 accesses the object 2 to perform the reading operation may include: The security module determines that a subject type corresponding to the subject 2 is os_ftp_b, and determines that an object type corresponding to the object 2 is os_dev_B; determines, based on the security policy, that there is no rule matching both os_ftp_b and os_dev_B, to determine that the subject 2 has no permission to access the object 2 to perform the reading operation; determines that the security policy includes a rule enforcing os_dev_B, where in the rule, the object type corresponding to the object 2 is configured to be in the enforcing mode; and forbids, according to the rule, the subject 2 to access to the object 2 to perform the reading operation.

It can be learned that, based on the MAC method provided in embodiments of this application, when a subject is to access an object to perform an operation, a security module can flexibly determine, while ensuring security, whether the behavior that the subject accesses the object to perform the operation needs to be allowed or rejected. This improves flexibility and security of the MAC mechanism.

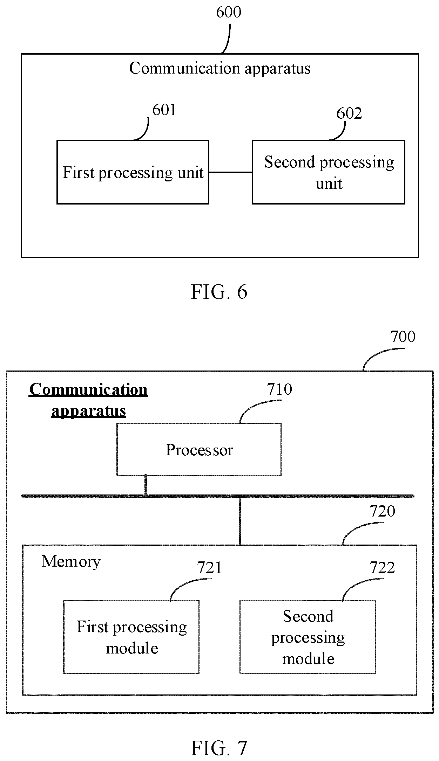

In addition, embodiments of this application further provide a communication apparatus 600 as shown in FIG. 6. FIG. 6 is a schematic diagram of a structure of a communication apparatus 600 according to an embodiment of this application. The communication apparatus 600 includes a first processing unit 601 and a second processing unit 602. The communication apparatus 600 may be configured to perform the method 100, the method 200, or the method 300 in the foregoing embodiments.

When the communication apparatus 600 performs the foregoing method 100:
The first processing unit 601 is configured to: when a first subject accesses a first object to perform a first operation, determine, based on a security policy, that the first subject has no permission to access the first object to perform the first operation, where the first object is configured to be in a permissive mode; and the second processing unit 602 is configured to allow the first subject to access the first object and perform the first operation.

For a specific implementation of performing the operation by the first processing unit 601 and an achieved effect, refer to related descriptions of S101 in the method 100. For a specific implementation of performing the operation by the second processing unit 602 and an achieved effect, refer to related descriptions of S 102 in the method 100.

In an implementation, the security policy includes a first rule, and the first rule indicates the first object to work in the permissive mode.

In an implementation, the communication apparatus 600 further includes a third processing unit. The third processing unit is configured to generate a first log after the first subject is allowed to access the first object and perform the first operation, where the first log is for recording information related to the fact that the first subject accesses the first object to perform the first operation.

In an implementation, the communication apparatus 600 further includes a fourth processing unit. The fourth processing unit is configured to update the security policy, where an updated security policy includes a second rule, and the second rule indicates that the first subject is allowed to access the first object to perform the first operation.

In an implementation, the communication apparatus 600 further includes a fifth processing unit. The fifth processing unit is configured to delete the first rule from the security policy.

In an implementation, the first processing unit 601 is further configured to: when a second subject accesses a second object to perform a second operation, determine, based on the security policy, that the second subject has no permission to access the second object to perform the second operation, where the second object is not configured to be in the permissive mode; and the second processing unit 602 is further configured to forbid the second subject to access the second object to perform the second operation. In this implementation, for a specific implementation of performing the operation by the first processing unit 601 and an achieved effect, refer to related descriptions of S103 in the method 100. For a specific implementation of performing the operation by the second processing unit 602 and an achieved effect, refer to related descriptions of S 104 in the method 100.

When the communication apparatus 600 performs the foregoing method 200:
The first processing unit 601 is configured to: when a first subject accesses a first object to perform a first operation, determine, based on a security policy, that the first subject has no permission to access the first object to perform the first operation, where the first subject is configured to be in an enforcing mode; and the second processing unit 602 is configured to forbid the first subject to access the first object to perform the first operation.

For a specific implementation of performing the operation by the first processing unit 601 and an achieved effect, refer to related descriptions of S201 in the method 200. For a specific implementation of performing the operation by the second processing unit 602 and an achieved effect, refer to related descriptions of S202 in the method 200.

In an implementation, the security policy includes a first rule, and the first rule indicates the first subject to work in the enforcing mode.

In an implementation, the communication apparatus 600 further includes a third processing unit. The third processing unit is configured to update the security policy, where an updated security policy includes a third rule, and the third rule indicates that the first subject is allowed to access the first object to perform the first operation.

In an implementation, the first processing unit 601 is further configured to: when a second subject accesses a second object to perform a second operation, determine, based on the security policy, that the second subject has no permission to access the second object to perform the second operation, where the second subject is not configured to be in the enforcing mode; and the second processing unit 602 is configured to allow the second subject to access the second object subject and perform the second operation. In this implementation, for a specific implementation of performing the operation by the first processing unit 601 and an achieved effect, refer to related descriptions of S203 in the method 200. For a specific implementation of performing the operation by the second processing unit 602 and an achieved effect, refer to related descriptions of S204 in the method 200.

When the communication apparatus 600 performs the foregoing method 300:
The first processing unit 601 is configured to: when a first subject accesses a first object to perform a first operation, determine, based on a security policy, that the first subject has no permission to access the first object to perform the first operation, where the first object is configured to be in an enforcing mode; and the second processing unit 602 is configured to forbid the first subject to access the first object to perform the first operation.

For a specific implementation of performing the operation by the first processing unit 601 and an achieved effect, refer to related descriptions of S301 in the method 300. For a specific implementation of performing the operation by the second processing unit 602 and an achieved effect, refer to related descriptions of S302 in the method 300.

In an implementation, the security policy includes a second rule, where the second rule indicates the first object to work in the enforcing mode.

In an implementation, the communication apparatus 600 further includes a third processing unit. The third processing unit is configured to update the security policy, where an updated security policy includes a third rule, and the third rule indicates that the first subject is allowed to access the first object to perform the first operation.

In an implementation, the first processing unit 601 is further configured to: when a second subject accesses a second object to perform a second operation, determine, based on the security policy, that the second subject has no permission to access the second object to perform the second operation, where the second object is not configured to be in the enforcing mode; and the second processing unit 602 is configured to allow the second subject to access the second object and perform the second operation. In this implementation, for a specific implementation of performing the operation by the first processing unit 601 and an achieved effect, refer to related descriptions of S303 in the method 300. For a specific implementation of performing the operation by the second processing unit 602 and an achieved effect, refer to related descriptions of S304 in the method 300.

In addition, embodiments of this application further provide a communication apparatus 700. FIG. 7 is a schematic diagram of a structure of a communication apparatus 700 according to an embodiment of this application. The communication apparatus 700 may be configured to perform the method 100, the method 200, or the method 300 in the foregoing embodiments.

As shown in FIG. 7, the communication apparatus 700 may include a processor 710 and a memory 720 coupled to the processor 710. The processor 710 may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor 710 may be one processor, or may include a plurality of processors. The memory 720 may include a volatile memory (English: volatile memory), for example, a random access memory (English: random access memory, RAM for short), or the memory may include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory 720 may include a combination of the foregoing types of memories. The memory 720 may be one memory, or may include a plurality of memories. In an implementation, the memory 720 stores computer-readable instructions, where the computer-readable instructions include a plurality of software modules, for example, a first processing module 721 and a second processing module 722. In addition, the computer-readable instructions may further include at least one of a third processing module, a fourth processing module, and a fifth processing module, respectively corresponding to the first processing unit 601, the second processing unit 602, the third processing unit, the fourth processing unit, and the fifth processing unit in the communication apparatus 600. After executing each software module, the processor 710 may perform a corresponding operation based on an indication of each software module. In this embodiment, an operation performed by a software module is actually an operation performed by the processor 710 based on the indication of the software module. For example, the "when a first subject accesses a first object to perform a first operation, determine, based on a security policy, that the first subject has no permission to access the first object to perform the first operation" performed by the first processing module 721 may actually mean the "when a first subject accesses a first object to perform a first operation, determine, based on a security policy, that the first subject has no permission to access the first object to perform the first operation" performed by the processor 710 based on instructions of the first processing module 721. In this case, the first processing module 721 may correspond to the first processing unit 601 in the communication apparatus 600.

In an example, the communication apparatus 700 may perform the method 100 in the foregoing embodiments. When the communication apparatus 700 is configured to perform the method 100 in the foregoing embodiments, the processor 710 is configured to perform all processing-related operations in the method 100. For example, the processor 710 is configured to: when a first subject accesses a first object to perform a first operation, determine, based on a security policy, that the first subject has no permission to access the first object to perform the first operation, where the first object is configured to be in a permissive mode, and allow the first subject to access the first object and perform the first operation.

**In** an example, the communication apparatus 700 may perform the method 200 in the foregoing embodiments. When the communication apparatus 700 is configured to perform the method 200 in the foregoing embodiments, the processor 710 is configured to perform all processing-related operations in the method 200. For example, the processor 710 is configured to: when a first subject accesses a first object to perform a first operation, determine, based on a security policy, that the first subject has no permission to access the first object to perform the first operation, where the first subject is configured to be in an enforcing mode; and forbid the first subject to access the first object to perform the first operation.

**In** an example, the communication apparatus 700 may perform the method 300 in the foregoing embodiments. When the communication apparatus 700 is configured to perform the method 300 in the foregoing embodiments, the processor 710 is configured to perform all processing-related operations in the method 300. For example, the processor 710 is configured to: when a first subject accesses a first object to perform a first operation, determine, based on a security policy, that the first subject has no permission to access the first object to perform the first operation, where the first object is configured to be in an enforcing mode; and forbid the first subject to access the first object to perform the first operation.

This application further provides a computer-readable storage medium, where the computer-readable storage medium stores instructions. When the instructions are run on a computer, the computer is enabled to perform any one or more operations in the method (for example, the method 100, the method 200, and the method 300) according to any one of the foregoing embodiments.

This application further provides a computer program product, including a computer program. When the computer program product is run on a computer, the computer is enabled to perform any one or more operations in the method (for example, the method 100, the method 200, and the method 300) according to any one of the foregoing embodiments.

This application provides a server, where the server stores program code. When the program code is run by a processor, any one or more operations in the method (for example, the method 100, the method 200, and the method 300) according to any one of the foregoing embodiments are implemented.

**In** the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into units is merely logical service division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art can be aware that, in the foregoing one or more examples, services described in the present invention may be implemented by using hardware, software, firmware, or any combination thereof. When the services are implemented by using the software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It can be understood that the foregoing descriptions are merely specific implementations of the present invention.

## Claims

1. A mandatory access control, MAC, method, applied to a security module in an operating system, wherein the security module works in an enforcing mode, and the method comprises:
when a first subject accesses a first object to perform a first operation, determining (S101), based on a security policy, that the first subject has no permission to access the first object to perform the first operation, wherein the first object is configured to be in a permissive mode, wherein the first object includes a file and/or a dir and/or a file system and/or a network port, and/or a device; and
allowing (S102) the first subject to access the first object and perform the first operation.

2. The method according to claim 1, wherein the security policy comprises a first rule, and the first rule indicates the first object to work in the permissive mode.

3. The method according to claim 1 or 2, wherein after the allowing the first subject to access the first object and perform the first operation, the method further comprises:
generating a first log, wherein the first log is for recording information related to the fact that the first subject accesses the first object to perform the first operation.

4. The method according to any one of claims 1 to 3, wherein the method further comprises:
updating the security policy, wherein an updated security policy comprises a second rule, and the second rule indicates that the first subject is allowed to access the first object to perform the first operation.

5. The method according to claim 2, wherein the method further comprises:
deleting the first rule from the security policy.

6. The method according to any one of claims 1 to 5, wherein the method further comprises:
when a second subject accesses a second object to perform a second operation, determining (S103), based on the security policy, that the second subject has no permission to access the second object to perform the second operation, wherein the second object is not configured to be in the permissive mode; and
forbidding (S104) the second subject to access the second object to perform the second operation.

7. A mandatory access control, MAC, method, applied to a security module in an operating system, wherein the security module works in a permissive mode, and the method comprises:
when a first subject accesses a first object to perform a first operation, determining (S301), based on a security policy, that the first subject has no permission to access the first object to perform the first operation, wherein the first subject or the first object is configured to be in an enforcing mode, wherein the first object includes a file and/or a dir and/or a file system and/or a network port, and/or a device; and
forbidding (S302) the first subject to access the first object to perform the first operation.

8. The method according to claim 7, wherein
the security policy comprises a first rule, and the first rule indicates the first subject to work in the enforcing mode; or
the security policy comprises a second rule, wherein the second rule indicates the first object to work in the enforcing mode.

9. The method according to claim 7 or 8, wherein the method further comprises:
updating the security policy, wherein an updated security policy comprises a third rule, and the third rule indicates that the first subject is allowed to access the first object to perform the first operation.

10. The method according to any one of claims 7 to 9, wherein the method further comprises:
when a second subject accesses a second object to perform a second operation, determining (S303), based on the security policy, that the second subject has no permission to access the second object to perform the second operation, wherein the second object and the second subject are not configured to be in the enforcing mode; and
allowing (S304) the second subject to access the second object and perform the second operation.

11. The method according to any one of claims 1 to 10, wherein the operating system is an operating system that performs MAC based on a security label.

12. The method according to claim 11, wherein the operating system is a Linux-based operating system, an Android-based operating system, or an Apple operating system.

13. The method according to any one of claims 1 to 11, wherein the security module is security-enhanced Linux, SELinux, or security-enhanced Android, SEAndroid.

14. A communication apparatus (700), wherein the communication apparatus (700) comprises a memory (720) and a processor (710);
the memory (720) is configured to store program code; and
the processor (710) is configured to run instructions in the program code, to enable the communication apparatus (700) to perform the method according to any one of claims 1 to 13.

15. A computer program product, comprising a program, wherein when the program is run on a processor, the method according to any one of claims 1 to 13 is implemented.

## Patentansprüche

1. Verfahren für obligatorische Zugriffssteuerung, MAC, angewandt auf ein Sicherheitsmodul in einem Betriebssystem, wobei das Sicherheitsmodul in einem Durchsetzungsmodus arbeitet und das Verfahren Folgendes umfasst:
wenn ein erstes Subjekt auf ein erstes Objekt zugreift, um eine erste Operation durchzuführen, Bestimmen (S101), basierend auf einer Sicherheitsrichtlinie, dass das erste Subjekt keine Berechtigung hat, auf das erste Objekt zuzugreifen, um die erste Operation durchzuführen, wobei das erste Objekt konfiguriert ist, in einem Zulassungsmodus zu sein, wobei das erste Objekt eine Datei und/oder ein Verzeichnis und/oder ein Dateisystem und/oder einen Netzwerkanschluss und/oder ein Gerät enthält; und
Gestatten (S102), dem ersten Subjekt, auf das erste Objekt zuzugreifen und die erste Operation durchzuführen.

2. Verfahren nach Anspruch 1, wobei die Sicherheitsrichtlinie eine erste Regel umfasst und die erste Regel dem ersten Objekt angibt, in dem Zulassungsmodus zu arbeiten.

3. Verfahren nach Anspruch 1 oder 2, wobei nach dem Gestatten, dem ersten Subjekt, auf das erste Objekt zuzugreifen und die erste Operation durchzuführen, das Verfahren ferner Folgendes umfasst:
Erzeugen eines ersten Protokolls, wobei das erste Protokoll zum Aufzeichnen von Informationen dient, die zu der Tatsache in Beziehung stehen, dass das erste Subjekt auf das erste Objekt zugreift, um die erste Operation durchzuführen.

4. Verfahren nach einem der Ansprüche 1 bis 3, wobei das Verfahren ferner Folgendes umfasst:
Aktualisieren der Sicherheitsrichtlinie, wobei eine aktualisierte Sicherheitsrichtlinie eine zweite Regel umfasst und die zweite Regel angibt, dass dem ersten Subjekt gestattet ist, auf das erste Objekt zuzugreifen, um die erste Operation durchzuführen.

5. Verfahren nach Anspruch 2, wobei das Verfahren ferner Folgendes umfasst:
Löschen der ersten Regel aus der Sicherheitsrichtlinie.

6. Verfahren nach einem der Ansprüche 1 bis 5, wobei das Verfahren ferner Folgendes umfasst:
wenn ein zweites Subjekt auf ein zweites Objekt zugreift, um eine zweite Operation durchzuführen, Bestimmen (S103), basierend auf der Sicherheitsrichtlinie, dass das zweite Subjekt keine Berechtigung hat, auf das zweite Objekt zuzugreifen, um die zweite Operation durchzuführen, wobei das zweite Objekt nicht konfiguriert ist, in dem Zulassungsmodus zu sein; und
Verbieten (S104), dem zweiten Subjekt, auf das zweite Objekt zuzugreifen, um die zweite Operation durchzuführen.

7. Verfahren für obligatorische Zugriffssteuerung, MAC, angewandt auf ein Sicherheitsmodul in einem Betriebssystem, wobei das Sicherheitsmodul in einem Zulassungsmodus arbeitet und das Verfahren Folgendes umfasst:
wenn ein erstes Subjekt auf ein erstes Objekt zugreift, um eine erste Operation durchzuführen, Bestimmen (S301), basierend auf einer Sicherheitsrichtlinie, dass das erste Subjekt keine Berechtigung hat, auf das erste Objekt zuzugreifen, um die erste Operation durchzuführen, wobei das erste Subjekt oder das erste Objekt konfiguriert ist, in einem Durchsetzungsmodus zu sein, wobei das erste Objekt eine Datei und/oder ein Verzeichnis und/oder ein Dateisystem und/oder einen Netzwerkanschluss und/oder eine Gerät enthält; und
Verbieten (S302), dem ersten Subjekt, auf das erste Objekt zuzugreifen, um die erste Operation durchzuführen.

8. Verfahren nach Anspruch 7, wobei
die Sicherheitsrichtlinie eine erste Regel umfasst und die erste Regel dem ersten Subjekt angibt, in dem Durchsetzungsmodus zu arbeiten; oder
die Sicherheitsrichtlinie eine zweite Regel umfasst, wobei die zweite Regel dem ersten Objekt angibt, in dem Durchsetzungsmodus zu arbeiten.

9. Verfahren nach Anspruch 7 oder 8, wobei das Verfahren ferner Folgendes umfasst:
Aktualisieren der Sicherheitsrichtlinie, wobei eine aktualisierte Sicherheitsrichtlinie eine dritte Regel umfasst und die dritte Regel angibt, dass dem ersten Subjekt gestattet ist, auf das erste Objekt zuzugreifen, um die erste Operation durchzuführen.

10. Verfahren nach einem der Ansprüche 7 bis 9, wobei das Verfahren ferner Folgendes umfasst:
wenn ein zweites Subjekt auf ein zweites Objekt zugreift, um eine zweite Operation durchzuführen, Bestimmen (S303), basierend auf der Sicherheitsrichtlinie, dass das zweite Subjekt keine Berechtigung hat, auf das zweite Objekt zuzugreifen, um die zweite Operation durchzuführen, wobei das zweite Objekt und das zweite Subjekt nicht konfiguriert sind, in dem Durchsetzungsmodus zu sein; und
Gestatten (S304), dem zweiten Subjekt, auf das zweite Objekt zuzugreifen und die zweite Operation durchzuführen.

11. Verfahren nach einem der Ansprüche 1 bis 10, wobei das Betriebssystem ein Betriebssystem ist, das MAC basierend auf einem Sicherheitsetikett durchführt.

12. Verfahren nach Anspruch 11, wobei das Betriebssystem ein Linux-basiertes Betriebssystem, ein Android-basiertes Betriebssystem oder ein Apple-Betriebssystem ist.

13. Verfahren nach einem der Ansprüche 1 bis 11, wobei das Sicherheitsmodul sicherheitserweitertes Linux, SELinux, oder sicherheitserweitertes Android, SEAndroid, ist.

14. Kommunikationsvorrichtung (700), wobei die Kommunikationsvorrichtung (700) einen Speicher (720) und einen Prozessor (710) umfasst;
der Speicher (720) konfiguriert ist, Programmcode zu speichern; und
der Prozessor (710) konfiguriert ist, Anweisungen in dem Programmcode auszuführen, um die Kommunikationsvorrichtung (700) in die Lage zu versetzen, das Verfahren nach einem der Ansprüche 1 bis 13 durchzuführen.

15. Computerprogrammprodukt, umfassend ein Programm, wobei, wenn das Programm auf einem Prozessor ausgeführt wird, das Verfahren nach einem der Ansprüche 1 bis 13 implementiert wird.

## Revendications

1. Procédé de contrôle d'accès obligatoire, MAC, appliqué à un module de sécurité dans un système d'exploitation, le module de sécurité fonctionnant dans un mode strict, et le procédé comprenant :
lorsqu'un premier sujet accède à un premier objet pour exécuter une première opération, la détermination (S101), en se basant sur une politique de sécurité, que le premier sujet n'a pas la permission d'accéder au premier objet pour exécuter la première opération, le premier objet étant configuré de façon à être dans un mode permissif, le premier objet comprenant un fichier et/ou un répertoire et /ou un système de fichiers et/ou un port réseau, et/ou un périphérique ; et
l'autorisation (S102) au premier sujet d'accéder au premier objet et d'exécuter la première opération.

2. Procédé selon la revendication 1, dans lequel la politique de sécurité comprend une première règle, et la première règle indique le premier objet à fonctionner dans le mode permissif.

3. Procédé selon la revendication 1 ou 2, le procédé comprenant en outre, après avoir autorisé le premier sujet à accéder au premier objet et à exécuter la première opération : la génération d'un premier journal, le premier journal servant à enregistrer des informations liées au fait que le premier sujet accède au premier objet pour exécuter la première opération.

4. Procédé selon l'une quelconque des revendications 1 à 3, le procédé comprenant en outre :
la mise à jour de la politique de sécurité, une politique de sécurité mise à jour comprenant une deuxième règle, et la deuxième règle indiquant que le premier sujet est autorisé à accéder au premier objet pour exécuter la première opération.

5. Procédé selon la revendication 2, le procédé comprenant en outre :
la suppression de la première règle de la politique de sécurité.

6. Procédé selon l'une quelconque des revendications 1 à 5, le procédé comprenant en outre :
lorsqu'un deuxième sujet accède à un deuxième objet pour exécuter une deuxième opération, la détermination (S103), en se basant sur la politique de sécurité, que le deuxième sujet n'a pas la permission d'accéder au deuxième objet pour exécuter la deuxième opération, le deuxième objet n'étant pas configuré de façon à être dans le mode permissif ; et
l'interdiction (S104) au deuxième sujet d'accéder au deuxième objet pour exécuter la deuxième opération.

7. Procédé de contrôle d'accès obligatoire, MAC, appliqué à un module de sécurité dans un système d'exploitation, le module de sécurité fonctionnant dans un mode permissif, et le procédé comprenant :
lorsqu'un premier sujet accède à un premier objet pour exécuter une première opération, la détermination (S301), en se basant sur une politique de sécurité, que le premier sujet n'a pas la permission d'accéder au premier objet pour exécuter la première opération, le premier sujet ou le premier objet étant configuré de façon à être dans un mode strict, le premier objet comprenant un fichier et/ou un répertoire et /ou un système de fichiers et/ou un port réseau, et/ou un périphérique ; et
l'interdiction (S102) au premier sujet d'accéder au premier objet pour exécuter la première opération.

8. Procédé selon la revendication 7, dans lequel
la politique de sécurité comprend une première règle, et la première règle indique le premier sujet à fonctionner dans le mode strict ; ou
la politique de sécurité comprend une deuxième règle, la deuxième règle indiquant le premier objet à fonctionner dans le mode strict.

9. Procédé selon la revendication 7 ou 8, le procédé comprenant en outre :
la mise à jour de la politique de sécurité, une politique de sécurité mise à jour comprenant une troisième règle, et la troisième règle indiquant que le premier sujet est autorisé à accéder au premier objet pour exécuter la première opération.

10. Procédé selon l'une quelconque des revendications 7 à 9, le procédé comprenant en outre :
lorsqu'un deuxième sujet accède à un deuxième objet pour exécuter une deuxième opération, la détermination (S103), en se basant sur la politique de sécurité, que le deuxième sujet n'a pas la permission d'accéder au deuxième objet pour exécuter la deuxième opération, le deuxième objet et le deuxième sujet n'étant pas configurés de façon à être dans le mode strict ; et
l'autorisation (S304) au deuxième sujet d'accéder au deuxième objet pour exécuter la deuxième opération.

11. Procédé selon l'une quelconque des revendications 1 à 10, dans lequel le système d'exploitation est un système d'exploitation qui exécute le contrôle MAC en se basant sur une étiquette de sécurité.

12. Procédé selon la revendication 11, dans lequel le système d'exploitation est un système d'exploitation basé sur Linux, un système d'exploitation basé sur Android, ou un système d'exploitation Apple.

13. Procédé selon l'une quelconque des revendications 1 à 11, dans lequel le module de sécurité est Linux à sécurité renforcée, SELinux, ou Android à sécurité renforcée, SEAndroid.

14. Appareil de communication (700), l'appareil de communication (700) comprenant une mémoire (720) et un processeur (710) ;
la mémoire (720) étant configurée de façon à stocker un code de programme ; et
le processeur (710) étant configuré de façon à exécuter des instructions dans le code de programme, pour permettre à l'appareil de communication (700) de mettre en œuvre le procédé selon l'une quelconque des revendications 1 à 13.

15. Progiciel comprenant un programme, lorsque le programme est exécuté sur un processeur, le procédé selon l'une quelconque des revendications 1 à 13 étant mis en œuvre.
